# EUROPEAN PATENT APPLICATION

(11) **EP 3 252 726 A1**
(43) Date of publication of application: **06.12.2017**
(21) Application number: 16200245.5
(22) Date of filing: 23.11.2016
(51) Int. Cl.: G08B 13/16

(54) **SYSTEM AND METHOD FOR A REDUCED POWER ALARM SYSTEM**

(30) Priority: 31.05.2016 US 201662343152 P
(71) Applicant: Essence Smartcare Ltd, 4672530 Herzlia Pituach (IL)
(72) Inventor: Amir, Ohad, 4642300 Herzlia (IL)
(74) Representative: Dennemeyer & Associates S.A.

(57) **Abstract**

A monitoring system (50) comprising at least one audio sensing device (56), at least one audio signal processor (55) adapted to perform audio processing electrically connected to the audio sensing device, a central hardware processor (55) adapted to receive digital electronic information from the audio signal processor, an electronic communication interface (60) adapted to deliver the digital electronic information between the audio signal processor and the central hardware processor and a dry contact (51) electrically connected to the electronic communication interface and electrically connected to the audio signal processor. The audio sensing device is configured to deliver audio signals to the audio signal processor, the audio signal processor processes the audio signals by applying audio processing algorithms and the audio signal processor delivers an electric current to the dry contact upon recognition of a predetermined audio event within the audio signals.

## Description

### BACKGROUND

The present invention, in some embodiments thereof, relates to monitoring premises, and more specifically, but not exclusively, monitoring premises such as a household, detecting conditions for initiating communication with a remote server or receiver and alerting said remote server or receiver.

There is the need for an alarm system that monitors presence(s) and/or action(s) of person(s) on premises and reacting to person related events. Examples of monitored premises are independent-living facilities for elders, hotel rooms and hospital beds. The automatic reaction may include enabling a means of two-way communication, such as an intercom, with the person on premises, or triggering some other action, for example notifying another person to go to the premises to provide help.

### SUMMARY

It is an object of the present invention to provide a system and a method for monitoring presence(s) and/or action(s) of person(s) on premises and reacting to person related events such as predetermined audio events.

The foregoing and other objects are achieved by the features of the independent claims. Further implementation forms are apparent from the dependent claims, the description and the figures.

According to a first aspect of the invention, a monitoring system comprises: at least one audio sensing device, at least one audio signal processor adapted to perform audio processing electrically connected to the at least one audio sensing device, a central hardware processor adapted to receive digital electronic information from the at least one audio signal processor, an electronic communication interface adapted to deliver the digital electronic information between the at least one audio signal processor and the central hardware processor and a dry contact electrically connected to the electronic communication interface and electrically connected to the at least one audio signal processor. The at least one audio sensing device is configured to deliver audio signals to the audio signal processor. The at least one audio signal processor processes the audio signals by applying audio processing algorithms to the audio signals, the at least one audio signal processor delivers an electric current to the dry contact upon recognition of a predetermined audio event within the audio signals.

The monitoring system is designed to reduce power consumption and electromagnetic radiation levels by delivering power to the electronic communication interface adapted to deliver the digital electronic information between the at least one audio signal processor and the central hardware processor only when the monitoring system detects that a predetermined audio event has occurred on the monitored premises.

According to a second aspect of the present invention, a method for operating an alarm system comprises: capturing audio signals by an audio sensing device, delivering the captured audio signals to an audio signal processor in a format recognizable by the audio signal processor, analyzing the delivered audio signals by the audio signal processor by applying audio processing algorithms to detect predetermined voice characteristics, delivering an electric current to a dry contact's input upon detection of the predetermined voice characteristics, delivering an additional electric current on the dry contact's output only upon delivery of the electric current on the dry contact's input, and delivering two-way digital information between the audio signal processor and a central hardware processor in a format recognizable by the audio signal processor and the central hardware processor using a communication interface delivered with the additional electric current by the dry contact.

With reference to the first and second aspects, in a first possible implementation of the first and second aspects the predetermined audio event is selected from the group consisting of: a predetermined code word, a predetermined code phrase, an increase in the volume of detected voice signals such as a shout or a scream, or predetermined voice characteristics. The audio processing algorithms include algorithms for recognition of the predetermined word or phrase, algorithms for speaker-dependent analysis, speaker-independent analysis or multi-user speech analysis to detect the increase in the volume of detected voice signals. Using algorithms for speaker-dependent analysis, speaker-independent analysis or multi-user speech analysis allows the system to be tailored to the voice characteristics of the persons normally present at the monitored premises and reduces the number of false alarms.

With reference to the first and second aspects, in a second possible implementation of the first and second aspects the monitoring system further comprises a server adapted to receive additional digital electronic information from the central hardware processor and an additional electronic communication interface adapted to deliver the additional digital electronic information between the central hardware processor and the server, electrically connected to the central hardware processor. The method further comprises delivering additional two-way information between the central hardware processor and a server in a format recognizable by the central hardware processor and the server for purposes including logging events and triggering delivery of additional electric currents to additional devices. As the server receives information from the central hardware processor it allows logging the information it receives.

With reference to the first and second aspects or the second possible implementation of the first and second aspect, in a third possible implementation of the first and second aspects the monitoring system further comprises a device capable of emitting an audio signal or a visual signal, electrically connected to the central hardware processor or a device capable of emitting a visual signal, electrically connected to the server. The method further comprises: upon the delivery of two-way digital information between the signal processor and the central hardware processor delivering an electric current to a device capable of emitting an audio signal or a visual signal, or upon the delivery of two-way digital information between the signal processor and the central hardware processor delivering an electric current to a device capable of emitting a visual signal. As a device capable of emitting a visual signal or an audio signal is connected to the central hardware processor or the server, it allows drawing the attention of a person designated to monitor the alarm system when the person is located sufficiently close to the central hardware processor or the server to hear or see a signal emitted by the device capable of emitting an audio signal or a visual signal.

With reference to the first and second aspects, in a fourth possible implementation of the first and second aspects the monitoring system further comprises digital storage hardware for recording audio signals, electrically connected to the at least one audio sensing device. The method further comprises: recording by the sensing device the captured audio signals on digital storage hardware. As the digital storage hardware is connected to at least one audio sensing device, it allows the audio sensing device to record audio signals. A signal processor can then use these recorded signals to facilitate the use of sophisticated and more accurate voice analysis algorithms for detecting predefined audio events.

With reference to the first and second aspects, in a fifth possible implementation of the first and second aspects the monitoring system further comprises: a two-way communication sub-system comprising two or more electronic two-way communication devices. At least one of the two or more electronic two-way communication devices is electrically connected to the central hardware processor. The method further comprises: delivering an electric current to a two-way communication device upon the delivery of two-way digital information between the audio signal processor and the central hardware processor. As one of the two-way communication devices is electrically connected to the central hardware processor, it allows a person located near the central hardware processor to communicate with another person, for example another person on premises who may be in need of help.

With reference to the first and second aspects and the fifth possible implementation of the first and second aspect, in a sixth possible implementation of the first and second aspects the two-way communication sub-system is an intercom such that a person located next to said intercom device electrically connected to the central hardware processor can hear and can be heard by a person located next to an additional intercom device.

With reference to the first and second aspects, in a seventh possible implementation of the first and second aspects the monitoring system further comprises: at least one additional sensor; and wherein the dry contact has a man-machine interface (MMI) for physically connecting the at least one additional sensor to the dry contact. As the dry contact has an MMI, the MMI allows connecting to the dry contact sensors that people can interact with by touching or pulling. The at least one additional sensor is a button, a pull-able object, a detachable cord or thread or a detachable button. Pushing the button or pulling the pull-able object triggers delivery of an electric current to the dry contact, and the dry contact delivers another electric current to the electronic communication interface. Pulling the detachable cord or thread such that part of the detachable cord or thread becomes detached from the dry contact's MMI or pushing the detachable button such that part of the detachable button becomes detached from the dry contact's MMI triggers delivery of an electric current to the dry contact, and the dry contact delivers another electric current to the electronic communication interface. The method further comprises: touching a button connected to the dry contact's man-machine interface (MMI) or pulling a pull-able object connected to the MMI, delivering an electric current to the dry contact's input upon the touching of the button or the pulling of the pull-able object, and delivering an additional electric current to the dry contact's output upon delivery of the electric current to the dry contact's input upon the touching of the button or the pulling of the pull-able object.

With reference to the first aspect, in an eighth possible implementation of the first aspect the monitoring system further comprises at least one additional dry contact. The at least one additional dry contact is electrically connected to the electronic communication interface and electrically connected to at least one of the at least one audio signal processors. The at least one of the at least one audio signal processors delivers electric current to the at least one additional dry contact, and the additional dry contact delivers electric current to the electronic communication interface. The at least one additional dry contact allows reducing power consumption and electromagnetic radiation when the monitoring system is installed such that the at least one audio signal processors are at a distance from one another prohibiting connecting all the at least one audio signal processors to a single dry contact.

With reference to the first aspect, in a ninth possible implementation of the first aspect the monitoring system further comprises: an additional dry contact electrically connected to the central hardware processor and the additional electronic communication interface. The central hardware processor is not connected to the additional electronic communication interface. The central hardware processor delivers current to the additional dry contact and the additional dry contact delivers current to said additional electronic communication interface. The additional dry contact allows further reduction of power consumption and electromagnetic radiation by powering the additional electronic communication interface only when the central hardware processor communicates with the server.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic block diagram of an exemplary system according to the present invention;
FIG. 2 is a flow diagram of an optional flow of operations according to the present invention;
FIG. 3 is a flow diagram of another optional flow of operations according to the present invention, with regard to implementation of present invention using a voice sensor and code word detection;
FIG. 4 is a flow diagram of another optional flow of operations according to the present invention, with regard to implementation of current invention using a voice sensor and speaker-dependent analysis, speaker-independent analysis and multi-user speech analysis;
FIG. 5 is a schematic block diagram of another exemplary system according to the present invention, using a button or a pull cord;
FIG. 6 is a flow diagram of an optional flow of operations according to the present invention, with regard to implementation of present invention using a button or pull cord;
FIG. 7 is a schematic block diagram of another exemplary system according to the present invention, with regard to implementation of present invention using a voice sensor, an audio processor and a two-ways communication sub-system; and
FIG. 8 is a flow diagram of an optional flow of operations according to the present invention, with regard to implementation of present invention using a voice sensor, an audio processor and a two-way communication sub-system.

### DETAILED DESCRIPTION

The present invention, in some embodiments thereof, relates to monitoring premises, and more specifically, but not exclusively, monitoring premises such as a household, detecting conditions for initiating communication with a remote server or receiver and alerting said remote server or receiver.

There is the need for an alarm system that monitors presence(s) and/or action(s) of person(s) on premises and reacting to person related events. Examples of monitored premises are independent-living facilities for elders, hotel rooms and hospital beds. The automatic reaction may include enabling a means of two-way communication, such as an intercom, with the person on premises, or triggering some other action, for example notifying another person to go to the premises to provide help.

A typical alarm system includes one or more sensors for person related signals on the premises, possibly connected to one or more signal processor(s) for processing the captured signals. A signal processor is connected to a central hardware processor. The central hardware processor communicates with a remote server(s) and/or receiver(s). Examples of sensors are motion sensors, audio sensors and proximity sensors. Typically, a signal processor is a designated electrical hardware component such as a designated DSP microcontroller, or a processor running suitable software for processing the signals delivered by the sensor(s). In embodiments where the sensor is an audio sensor, the signal processor could be adapted to process audio signals received from the audio sensor by applying audio processing algorithms, for identifying a specific code word, code phrase, scream or any other vocal cue or event within audio captured by the audio sensor. A central hardware processor, henceforth referred to as a control unit, is typically, but not exclusively, a processor running suitable software for communicating with a signal processor and possibly also with a server. A server is typically one or more processors running software suitable for communicating with the control unit and for taking additional actions.

Communication between a control unit and a signal processor typically consists of two-way delivery of digital information between control unit and signal processor. In some embodiments, the communication between signal processor(s) and a control unit may be over an electrical channel(s) which may be a wired or wireless channel(s). A communication channel typically contains electrical components for transmitting and receiving signals, memory for storing received signals and signals to be sent, and a controller, for example a hardware network interface controller or a processor running network software. Keeping these channels continuously operational consumes electrical power and increases the radiation levels of radio-frequency (RF) fields in the vicinity of the sensor(s). To reduce power consumption and RF radiation levels, signal processor(s) are connected to a control unit using a dry contact, for example an electrical circuit which is normally closed and opens in response to current from the signal processor or from the sensor. In such embodiments, power consumption and radiation levels are reduced as the communication channel is powered only when triggered by the sensor. Unless triggered by the sensor, the dry contact does not power the communication channel. In embodiments, where there is an audio sensor and an audio signal processor applying voice processing algorithms, the communication channel can be powered upon a voice trigger. In such embodiments the dry contact is activated when the audio signal processor detects a voice trigger, powering the communication channel.

Radiation emissions from active communication channels might interfere with the operation of other devices and channels on premises, such as an AM/FM radio or medical equipment. By reducing the amount of time communication channels are active, the alarm system may impact to a lesser degree the operation of other devices when an alarm is not triggered.

In some embodiments, the dry contact is designed to bypass restrictions with triggering electrical pulses, for example Jewish religion related restrictions on using electricity on the Sabbath. An example for such a contact is an electrical circuit that is normally closed and opens in response to identifying specific word phrase or other vocal event by the sensor. Such a contact allows using the alarm system on the Sabbath without restrictions.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The term dry contact refers to an electrical circuit or connection that is not wetted by its own current source. A dry contact depends on an external source for an electrical current. Activating a dry contact refers to delivering an electrical current to the dry contact or delivering to the dry contact a trigger for generating an electrical current. In some embodiments a dry contact has an electrical input and an electrical output. In such embodiments when a dry contact is activated by an electrical current delivered to the electrical input, the dry contact enables delivering an electric current on the electrical output. In other embodiments the input could be a physical input, for example a pressure sensor.

The present invention refers to alarm systems using a dry contact to connect one or more sensors and signal processors with one or more control units, where the dry contact is activated as a result of an event detected by the sensor and/or processed by the signal processor.

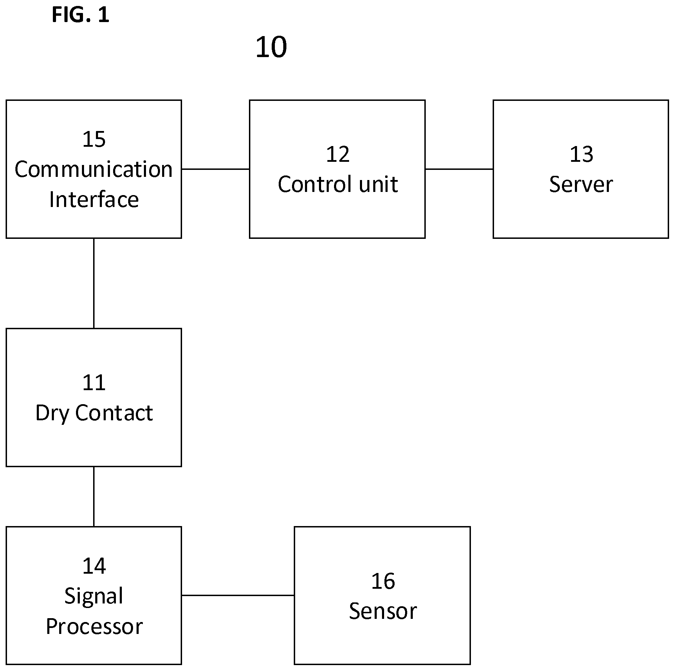

Reference is now made to **FIG. 1****,** showing an illustrative system **10** having a sensor **16** electrically connected to a signal processor **14,** according to some embodiments of the present invention. In such embodiments, the signal processor **14** is connected to a communication interface **15** via a dry contact **11.** In such embodiments, the communication interface **15** additionally connects to control unit **12** through a digital communication network, such as a Local Area Network (LAN) or a Wide Area Network (WAN). In such embodiments the system **10** includes one or more sensors **16** such as voice sensors, proximity sensors or any other sensors, located on premises and connected to one or more signal processors **14.** In such embodiments, the communication interface **15,** which could be a Wi-Fi controller, is connected to a control unit **12** via a digital communication network. In such embodiments the electrical current activating dry contact **11** enables the powering of communication interface **15.** In such embodiments the control unit **12** may be connected to a server or receiver **13,** which may or may not be on premises. Communication between a control unit and a server typically consists of two-way delivery of digital information between control unit and server. The connection between the control unit and the server or receiver could utilize an Internet Protocol (IP) connection over a network such as a Local Area Network (LAN), a Global System for Mobile Communication (GSM) or a Public Switched Telephone Network (PSTN). In such embodiments, the server **13** may be used for logging events, triggering additional alerts, indicating to a personnel member to try and make contact with a person within the monitored premises or to visit the premises, triggering automatic responses etc. Server **13** could be, but is not limited to, a single computer, a collection of computers or a cloud based computing service.

In some embodiments, a system may also include one or more alarm devices capable of emitting audio signals, for example a bell or a siren, or visual signals, for example a light bulb or a light emitting diode (LED). In such embodiments, alarm devices may be connected electrically to a control unit or a server. A control unit or a server may activate an alarm device, for example deliver a signal to a bell so that the bell sounds or to a light so that the light flashes. A person, designated to respond in case an alarm occurs, may be present sufficiently close to an alarm device to notice audio and/or visual signals emitted by the alarm device. Upon noticing an audio or visual signal from an alarm device, the person could perform an action, for example go to the location where the sensor is located.

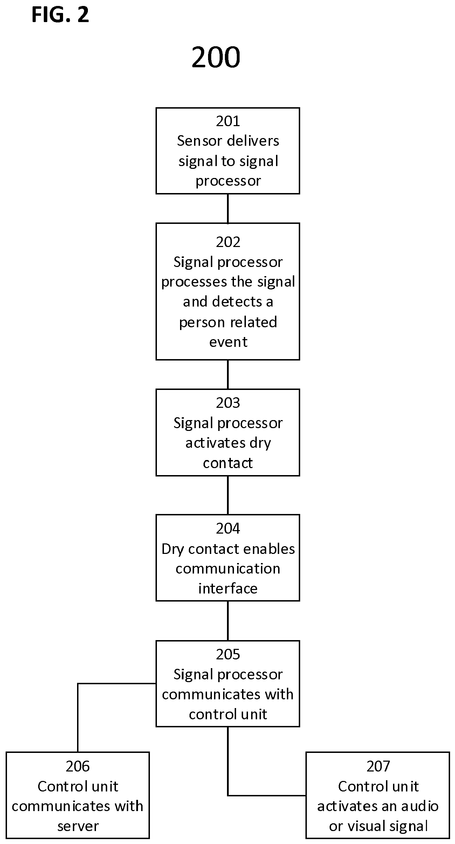

FIG. 2 depicts an optional flow of operations **200** in a system using a dry contact, according to some embodiments of the present invention. In such embodiments a sensor may capture a signal and deliver the signal to the signal processor, for example a voice sensor may capture sound and deliver the sound signal to a signal processor. The signal processor processes the signal in **202,** and upon recognizing an event, such as the identification of a specific sound or voice, activates the dry contact in 203 by delivering electrical current to the dry contact's electrical input. As a result, in **204** the dry contact enables the communication interface to the control unit by delivering an electrical current to the electrical components of the communication interface. The signal processor communicates with the control unit in **205,** and the control unit may communicate with a server in **206.** and/or in **207** activate an audio or visual alarm, for example a bell or a flashing light, to alert a person who may be designated to respond to said signals.

In some embodiments the sensor may be a voice sensor, for example a microphone or an electrostatic sensor, and the signal processor may be an audio processor that is a processing platform suitable for receiving and processing audio signals, for example by executing voice processing software or operating hardware components such as a dedicated Digital Signal Processor (DSP).

In some embodiments where there is an audio processor, the audio processor may be adapted to recognize a predetermined code word or code phrase, a sound such as a scream, or the like which may indicate the need for help.

In some embodiments, the sensor may capture audio continuously, and the signal processor may analyze a moving time window of the audio, with optional overlaps between consecutive windows. For example, the signal processor may analyze the audio signal at windows of 10 seconds at a time, with an overlap of 9 seconds between every two windows.

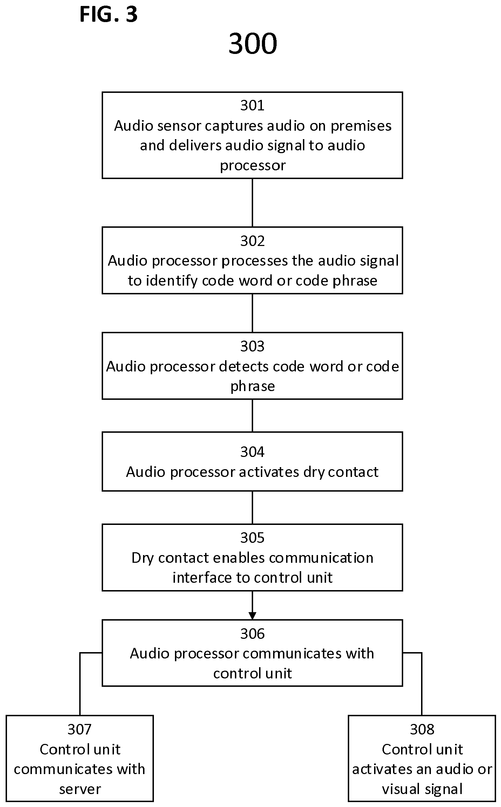

FIG. 3 depicts an optional flow of operations **300** in a system with code word/phrase detection, according to some embodiments of the present invention. In such embodiments an audio sensor, which could be a microphone, detects the sounds on premises and generates an audio signal representing them in **301.** Said signal is delivered to the audio processor. In **302** the audio processor processes the signal generated in **301** and analyzes the signal using word/phrase/scream/etc. detection algorithms. When a person on premises says the predefined code word/phrase or makes the predetermined sound, the processing in **302** results in the audio processor identifying the predefined code word or phrase in **303.** In **304** the audio processor activates the dry contact. As a result of activating the dry contact in **304,** the communication interface to a control unit is enabled in **305** by delivering an electrical current to the electrical components of the communication interface. In **306** the audio processor communicates with the control unit. The control unit may communicate with a server in **307** and/or in **308** activate an audio or visual signal, for example a bell or a flashing light, to alert a person who may be designated to respond to said signals.

The code word or phrase should be composed of sufficient syllables so as not to be falsely identified in common everyday speech or in other audio sources captured by the sensor, for example a radio or television broadcast. Audio processing algorithms may use word spotting techniques, for example small vocabulary speech recognition which has higher precision rates than continuous speech recognition.

In some embodiments where there is an audio processor, the audio processor may be adapted, for example trained, to recognize the voices of persons on premises and the volume at which said voices are detected, or the voice of one or more specific persons and the volumes at which said voices are detected, regardless of the spoken words. The audio processing component may use speaker-dependent algorithms, speaker-independent algorithms, multi-speaker analysis or the like to determine whether the person requires help, for example if the volume of the person's voice exceeds a predetermined volume.

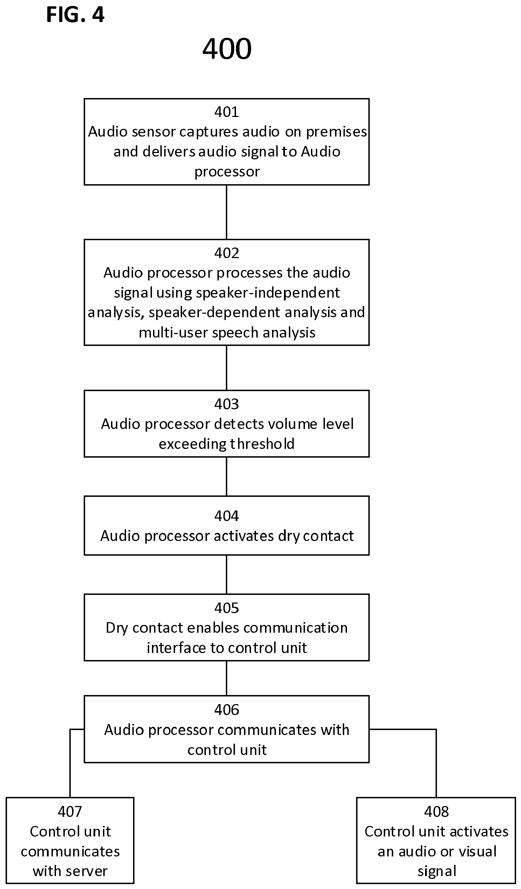

FIG. 4 depicts an optional flow of operations **400** of a system wherein the audio processor uses such audio processing algorithms, according to some embodiments of the present invention. In such embodiments in **401** an audio sensor captures sounds and generates an audio signal to the audio processor. The signal is processed by the audio processor in **402,** applying voice analysis algorithms which could be speaker-independent algorithms, speaker-dependent algorithms and multi-user speech analysis algorithms. When raised volume levels are detected in **403,** the audio processor activates the dry contact in **404.** In **405,** the dry contact enables the communication interface to the control unit by delivering an electrical current to the electrical components of the communication interface. Now in **406** the audio processor communicates with the control unit. The control unit may communicate with a server as in **407** and/or activate an audio or visual signal for example a bell or a flashing light, in **408.**

In some embodiments where there is a voice sensor, there may be hardware for recording the captured audio to storage, which could include volatile or non-volatile digital storage electrically connected to the voice sensor or audio processor. The recording method may be a sliding window, such that at every point in time a recording of the time immediately preceding the point is available. The recording method may use the storage in a cyclical manner, such that the same storage is overwritten as time goes by, at every point in time keeping the recording of the time immediately preceding said point available. The signals recorded to storage can be used for quality assurance or for the audio processing.

In some embodiments, the dry contact may have a man-machine interface (MMI). In such embodiments a touchable object may be connected to a physical part of the dry contact's MMI, where touching, pressing or pulling the object activates the dry contact and causes the dry contact to deliver an electric current on the dry contact's output. In some embodiments, the touchable object may be a button. In some embodiments, the touchable object may be a detachable object such as a detachable cord or thread device. In these embodiments pressing the button or pulling the detachable cord or thread so that part of the detachable cord or thread becomes detached from the MMI activates the dry contact and causes the dry contact to deliver an electric current on the dry contact's output.

In some embodiments, where there is a touchable object connected directly to the dry contact's MMI, there may be a processor that is a processing platform suitable for communicating with a control unit, for example by executing network communication software or operating dedicated hardware components.

In some embodiments, there may be a housing incorporating one or more sensors (for example one or more of voice sensors, buttons and objects that can be pulled). The housing may also store a signal processor, such as an audio signal processor. Sensors sharing housing may share a signal processor. Multiple signal processors, whether sharing housing or in separate housings, may communicate with a common control unit. Signal processors may share the communication interface for communicating with control units.

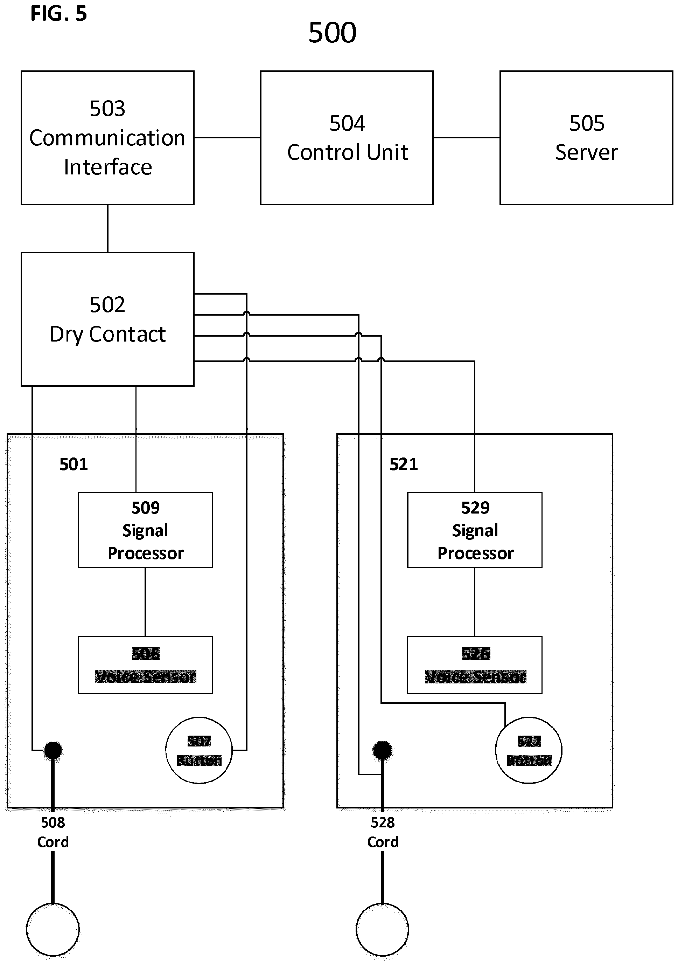

Referring to FIG. 5, showing an illustrative system **500** comprising two housings **501** and **521,** according to some embodiments of the present invention. In such embodiments one or more housings may contain multiple sensors, for capturing different types of signals. Housing **501** includes a voice sensor **506,** a button **507** or a cord **508.** In some embodiments the button and cord connect directly to a dry contact **502;** in some embodiments the voice sensor **506** connects to a signal processor **509.** In such embodiments the signal processor is connected to the dry contact **502.** In such embodiments the dry contact **502** is then connected to a communication interface **503.** In such embodiments the communication interface **503** is connected to a control unit **504** which is connected to a server **505.** In such embodiments, also button **527,** cord **528** or signal processor **529** are connected to dry contact **502.** In such embodiments any one of the sensors can activate the dry contact **502,** triggering the activation of the communication interface **503** and communication between control unit **504** and signal processor **509** or **529.**

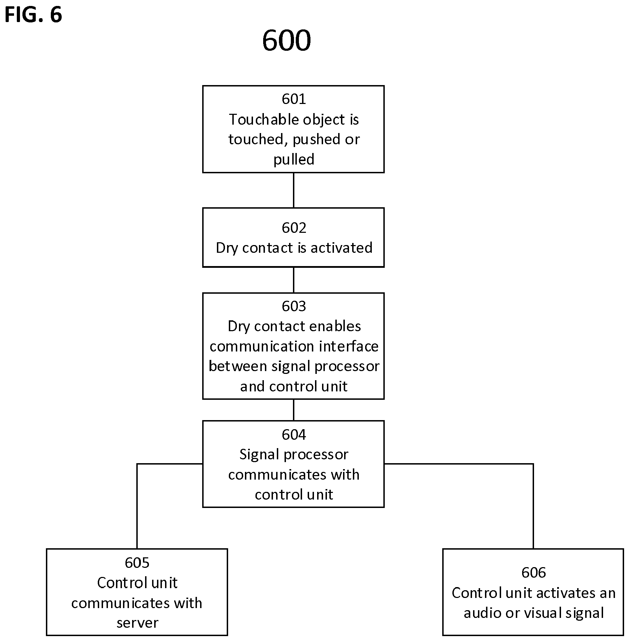

FIG. 6 depicts an optional flow of operations **600** in a system comprising a button or a cord, according to some embodiments of the present invention. In such embodiments, when a touchable object is touched, pushed or pulled in **601,** in **602** the dry contact is activated. In some embodiments, the dry contact enables a communication interface between a control unit and the signal processor in **603** by delivering an electrical current to the electrical components of the communication interface, followed by the control unit and the signal processor communicating **604.** The control unit may communicate with a server in **605** and/or activate an audio or visual signal in **606.**

In some embodiments, the system supports two-way communication between a person on premises and a person at a remote location, for example near a control unit or a server, by using a two-way communication sub-system comprising two or more devices suitable for two-way communication such as intercoms, dedicated handheld two-way transceivers that use a dedicated radio frequency channel or video-conferencing systems. In all such embodiments, the system comprises a suitable two-way communication device located on premises and another suitable two-way communication device located at another location, for example near a control unit or server. When the two-way communication devices are activated, person(s) near one two-way communication device can communicate with person(s) near another two-way communication device by speaking to each other or seeing each other's images.

In some embodiments where two-way communication is supported, at least one of the two or more two-way communication devices may not be active at all times, that is signals produced by one transmitter may not be received by another receiver. Activating a two-way communication device may be done by providing the device with an electric current or electrically providing the device with a signal to enable the device's communication hardware and/or software.

In some embodiments where two-way communication is supported, a two-way communication device might be activated by a control unit or server(s) after the control unit communicates with a signal processor via a dry contact. In some embodiments where two-way communication is supported, a two-way communication device located near a signal processor may be activated by the signal processor following the signal processor communicating with a control unit.

In some embodiments, a two-way communication device may be placed in a shared housing with one or more sensors.

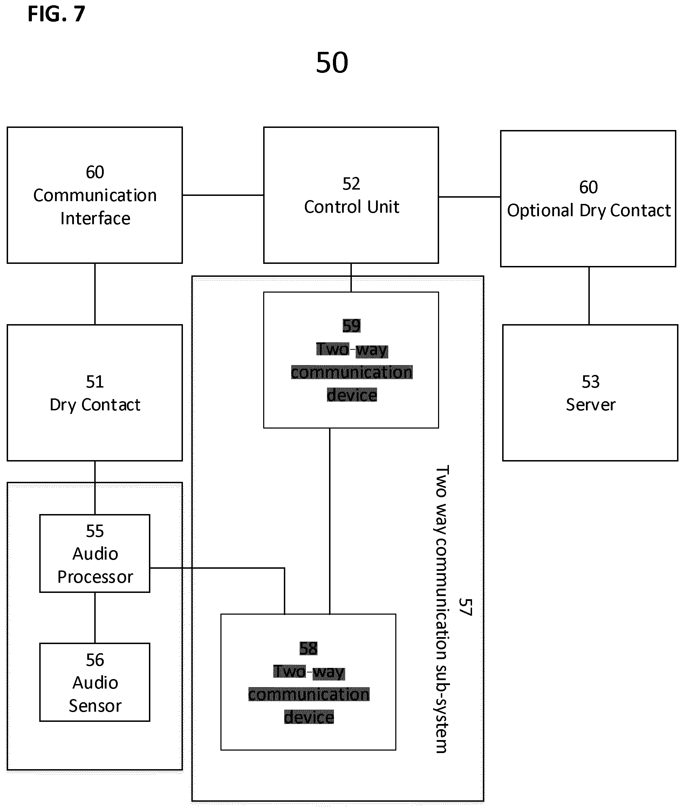

Referring now to FIG. 7, showing an illustrative system **50** using a two-way communication sub-system **57,** including a two-way communication device **59** electrically connected to control unit **52** and a two-way communication device **58** electrically connected to a signal processor, according to some embodiments of the present invention. In such embodiments, two-way communication devices **58** and **59** are connected to each other using a suitable communication channel such as hardware for radio transmissions or hardware and software for an Ethernet network. In some embodiments an additional dry contact **60** may be used to connect control unit **52** and server **53.**

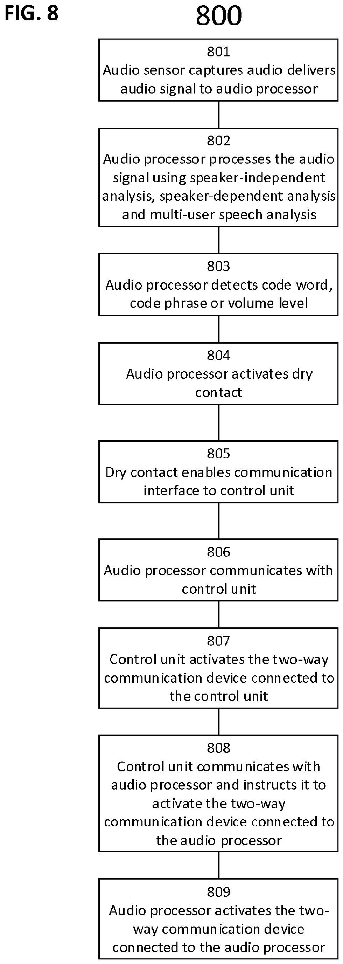

FIG. 8 depicts an optional flow of operation **800** in a system with a voice sensor and a two-way communication sub-system, according to some embodiments of the present invention. In **801** an audio sensor captures voices and creates an audio signal. In such embodiments the audio processor analyzes the signal in **802,** applying voice processing algorithms. When a person says a predefined code word or phrase or a person's voice is raised, the voice processing algorithms result in detection of the predefined code word, code phrase, or raised volume level in **803.** The audio processor activates the dry contact in **804,** and the dry contact activates the communication interface to a control unit in **805.** In **806** the control unit communicates with the audio processor. In such embodiments, in **807** the control unit activates the two-way communication device connected to the control unit. In such embodiments the control unit may communicate with the audio processor and deliver the audio processor an instruction in **808** to activate the two-way communication device connected to the audio processor. In **809** the audio processor activates the two-way communication device connected to the audio processor. Person(s) located away from the sensor can communicate with person(s) near the sensor using the activated two-way communication devices.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant sensors and audio processing algorithms will be developed and the scope of the terms "sensor" and "audio processing algorithm" are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A monitoring system (50), comprising:
at least one audio sensing device (56);
at least one audio signal processor (55), adapted to perform audio processing, electrically connected to said at least one audio sensing device;
a central hardware processor (52) adapted to receive digital electronic information from said at least one audio signal processor;
an electronic communication interface (60) adapted to deliver said digital electronic information between said at least one audio signal processor and said and central hardware processor;
a dry contact (51) electrically connected to said electronic communication interface and electrically connected to said at least one audio signal processor;
wherein said at least one audio sensing device (56) is configured to deliver audio signals to said audio signal processor (55);
wherein said at least one audio signal processor (55) processes said audio signals by applying audio processing algorithms to said audio signals; and
wherein said at least one audio signal processor (55) delivers an electric current to said dry contact (51) upon recognition of a predetermined audio event within the audio signals.

2. The monitoring system of claim 1, wherein the predetermined audio event is selected from the group consisting of: a code word; a code phrase; a shout, a scream, or predetermined voice characteristics.

3. The monitoring system of claim 1, further comprising at least one additional dry contact (51),
wherein said at least one additional dry contact (51) is electrically connected to said electronic communication interface and electrically connected to at least one of said at least one audio signal processors (55) ; and
wherein said at least one of said at least one audio signal processors (55) delivers electric current to said at least one additional dry contact (51), and said additional dry contact (51) delivers electric current to said electronic communication interface.

4. The monitoring system of claim 1, further comprising:
a server (53) adapted to receive additional digital electronic information from said central hardware processor (52); and
an additional electronic communication interface adapted to deliver said additional digital electronic information between said central hardware processor (52) and said server (53), electrically connected to said central hardware processor.

5. The monitoring system of claim 4, further comprising an additional dry contact (60) electrically connected to said central hardware processor (52) and said additional electronic communication interface;
wherein said central hardware processor (52) is not connected to said additional electronic communication interface; and
wherein said central hardware processor (52) delivers current to said additional dry contact (60) and said additional dry contact (60) delivers current to said additional electronic communication interface.

6. The monitoring system of claim 1, further comprising a device capable of emitting an audio signal or a visual signal, electrically connected to said central hardware processor (52) or said server (53).

7. A method for operating an alarm system, comprising:
capturing audio signals by an audio sensing device;
delivering said captured audio signals to an audio signal processor in a format recognizable by said audio signal processor;
analyzing said delivered audio signals by said audio signal processor by applying audio processing algorithms to detect predetermined voice characteristics;
delivering an electric current to a dry contact's input upon detection of said predetermined voice characteristics;
delivering an additional electric current on said dry contact's output only upon delivery of said electric current on said dry contact's input; and
delivering two-way digital information between said audio signal processor and a central hardware processor in a format recognizable by said audio signal processor and said central hardware processor using a communication interface delivered with said additional electric current by said dry contact.

8. The method of claim 7, wherein said predetermined voice characteristics include a predetermined word or phrase, and wherein said audio processing algorithms include algorithms for recognition of said predetermined word or phrase; and
wherein said predetermined voice characteristics include an increase in the volume of detected voice signals, and wherein said audio processing algorithms include algorithms for speaker-dependent analysis, speaker-independent analysis or multi-user speech analysis to detect said increase in the volume of detected voice signals.

9. The monitoring system of claim 1, further comprising at least one additional sensor (501) and wherein said dry contact has a man-machine interface (MMI) for physically connecting said at least one additional sensor to said dry contact.

10. The monitoring system of claim 9, wherein said at least one additional sensor is a button (507) connected to said dry contact's MMI, and
wherein pressing said button triggers delivery of an electric current to said dry contact, and said dry contact delivers another electric current to said electronic communication interface upon delivery of said electric current triggered by pressing said button.

11. The monitoring system of claim 9, wherein said at least one additional sensor is a pull-able object (508) connected to said dry contact's MMI, and
wherein pulling said pull-able object triggers delivery of an electric current to said dry contact, and said dry contact delivers another electric current to said electronic communication interface upon delivery of said electric current triggered by pulling said pull-able object.

12. The monitoring system of claim 9, wherein said at least one additional sensor is a detachable cord or thread or detachable button connected to said dry contact's MMI, and
wherein pulling said detachable cord or thread such that part of said detachable cord or thread becomes detached from said dry contact's MMI or pushing said button such that part of said detachable button becomes detached from said dry contact's MMI triggers delivery of an electric current to said dry contact, and said dry contact delivers another electric current to said electronic communication interface upon delivery of said electric current triggered by said detaching said part of detachable cord or thread.

13. The method of claim 7, further comprising:
touching a button connected to said dry contact's man-machine interface (MMI) or pulling a pull-able object connected to said MMI;
delivering an electric current to said dry contact's input upon said touching of said button or said pulling of said pull-able object; and
delivering an additional electric current to said dry contact's output upon delivery of said electric current to said dry contact's input upon said touching of said button or said pulling of said pull-able object.

14. The monitoring system of claim 1, further comprising digital storage hardware for recording audio signals, electrically connected to said at least one audio sensing device.

15. The monitoring system of claim 1, further comprising a two-way communication sub-system (57) comprising two or more electronic two-way communication devices (58,59);
wherein at least one of said two or more electronic two-way communication devices is electrically connected to said central hardware processor.
